# EUROPÄISCHE PATENTANMELDUNG

(11) **EP 1 262 761 A1**
(43) Veröffentlichungstag der Anmeldung: **04.12.2002**
(21) Anmeldenummer: 02010020.2
(22) Anmeldetag: 04.05.2002
(51) Int. Cl.: G01N 11/06, F01M 11/12

(54) **Verfahren zum Bestimmen der Viskosität einer Betriebsflüssigkeit einer Brennkraftmaschine**

(30) Priorität: 22.05.2001 DE 10124890
(71) Anmelder: Conti Temic microelectronic GmbH, 90411 Nürnberg (DE)
(72) Erfinder: Hubrich, Stefan, 70794 Filderstadt (DE); Pulvermüller, Michael, 73326 Deggingen (DE)
(74) Vertreter: Kolb, Georg

(57) **Zusammenfassung**

Die Erfindung betrifft ein Verfahren zum Bestimmen der Viskosität einer Betriebsflüssigkeit einer Brennkraftmaschine eines Fahrzeugs durch Ermitteln der Füllstandshöhe der Betriebsflüssigkeit.

Bei einem bekannten Verfahren wird die Viskosität der Betriebsflüssigkeit aus dem zeitlichen Verlauf von Änderungen der Füllstandshöhe der Betriebsflüssigkeit ermittelt. Diese wird nach dem Abschalten einer Brennkraftmaschine durch Messung des zeitlichen Verlaufs der Füllstandshöhe des Motorenöls bestimmt. Die Messung kann aber durch dynamische Beanspruchungen der Brennkraftmaschine vor dem Abstellen stark verfälscht werden.

Dieser Nachteil wird bei dem vorliegenden Verfahren dadurch vermieden, dass ein Sensor zum Ermitteln der Füllstandshöhe der Betriebsflüssigkeit vorgesehen ist, der ein Messvolumen aufweist, das über eine dämpfende Einrichtung mit einem Vorratsvolumen der Betriebsflüssigkeit verbunden ist, beim Start der Brennkraftmaschine der Verlauf der Füllstandshöhe der Betriebsflüssigkeit im Messvolumen des Sensors gemessen wird und der so ermittelte zeitliche Verlauf der Füllstandshöhe als Maß für die Viskosität dient.

## Beschreibung

Die Erfindung betrifft ein Verfahren zum Bestimmen der Viskosität einer Betriebsflüssigkeit einer Brennkraftmaschine nach dem Oberbegriff des Anspruchs 1.

Ein derartiges Verfahren ist aus der DE 195 18 776 A1 bekannt. Dort wird ein Verfahren beschrieben, um die Viskosität einer Betriebsflüssigkeit aus dem zeitlichen Verlauf von Änderungen der Füllstandshöhe der Betriebsflüssigkeit zu ermitteln. Bei diesem bekannten Verfahren wird die Viskosität des Motorenöls nach dem Abschalten einer Brennkraftmaschine durch Messung des zeitlichen Verlaufs der Füllstandshöhe des Motorenöls bestimmt. Die Rückkehr des Motorenöls in das Vorratsvolumen erfolgt mit einer Zeitverzögerung nach dem Abstellen des Motors in Abhängigkeit von der Viskosität. Neben dem zeitlichen Verlauf der Füllstandshöhe findet auch die Temperatur des Motorenöls Eingang in das bekannte Verfahren, da die Viskosität des Motorenöls im allgemeinen von seiner Temperatur abhängig ist.

Neben diesen auf einfache Weise zu messenden Größen wird die Messung der Viskosität nach dem bekannten Verfahren jedoch auch von weiteren Größen beeinflusst. So kann eine hohe dynamische Beanspruchung der Brennkraftmaschine in einem Zeitraum unmittelbar vor dem Abstellen zu einer Verschäumung des Motorenöls führen. Die daraus resultierende langsamere Änderung der Füllstandhöhe nach dem Abschalten verfälscht dann die eigentliche Messung. Eine objektive Messgröße für die dynamische Beanspruchung der Brennkraftmaschine ist aber nicht auf einfache Weise zu bestimmen.

Ein Abstellen der Brennkraftmaschine bei Schräglage des Fahrzeugs beeinträchtigt ebenfalls das Zurückfließen des Motorenöls in das Vorratsvolumen.

Ein weiterer Nachteil ist darin zu sehen, dass die für die Messung erforderlichen Elektronikmodule noch die erforderliche Zeit nach dem Abstellen der Brennkraftmaschine aktiv betrieben werden müssen.

Aufgabe der Erfindung ist es, ein Verfahren zum Bestimmen der Viskosität einer Betriebsflüssigkeit einer Brennkraftmaschine anzugeben, das mit wenigen Messgrößen ein genaues Ergebnis liefert und das während des Betriebs der Brennkraftmaschine abläuft.

Diese Aufgabe wird durch ein Verfahren mit den Merkmalen des Anspruchs 1 gelöst. Die Ausgestaltung der Erfindung erfolgt gemäß den Merkmalen der abhängigen Ansprüche.

Bei dem Verfahren zum Bestimmen der Viskosität einer Betriebsflüssigkeit einer Brennkraftmaschine durch Ermitteln der Füllstandshöhe der Betriebsflüssigkeit, ist ein Sensor zum Ermitteln der Füllstandshöhe der Betriebsflüssigkeit vorgesehen, der ein Messvolumen aufweist, das über eine dämpfende Einrichtung mit einem Vorratsvolumen der Betriebsflüssigkeit verbunden ist. Beim Startvorgang der Brennkraftmaschine wird der Verlauf der Füllstandshöhe (H) der Betriebsflüssigkeit im Messvolumen des Sensors gemessen. Aus dem zeitlichen Verlauf der Füllstandshöhe (H) wird die Viskosität bestimmt. Im Gegensatz zum dem aus der DE 195 18 776 A1 bekannten Verfahren wird hier ein Sensor verwendet, der eine den Verlauf der Messwerte dämpfende Struktur aufweist. Die Erfassung der Messwerte beim Start der Brennkraftmaschine hat den entscheidenden Vorteil, dass regelmäßig kontrollierte Randbedingungen vorliegen.

In einer ersten Ausführungsform des Verfahrens wird die Temperatur (T) der Betriebsflüssigkeit beim Startvorgang gemessen und geht in die Bestimmung der Viskosität mit ein. Dadurch können die ermittelten Werte für die Viskosität um den Einfluss der Temperatur der Betriebsflüssigkeit beim Start korrigiert werden.

In einer zweiten Ausführungsform des Verfahrens wird zusätzlich die Drehzahl der Brennkraftmaschine nach dem Startvorgang gemessen und bei der Bestimmung der Viskosität berücksichtigt. Dadurch können die ermittelten Werte für die Viskosität um den Einfluss der drehzahlabhängigen Änderung der Menge der Betriebsflüssigkeit beim Start korrigiert werden.

In einer weiteren Ausführungsform des Verfahrens wird die Temperatur der Betriebsflüssigkeit beim Startvorgang und der Verlauf der Temperatur der Betriebsflüssigkeit zur Bestimmung der Viskosität mit herangezogen.

Die Erfindung soll nachfolgend anhand von Ausführungsbeispielen und Figuren näher erläutert werden. Kurze Beschreibung der Figuren:

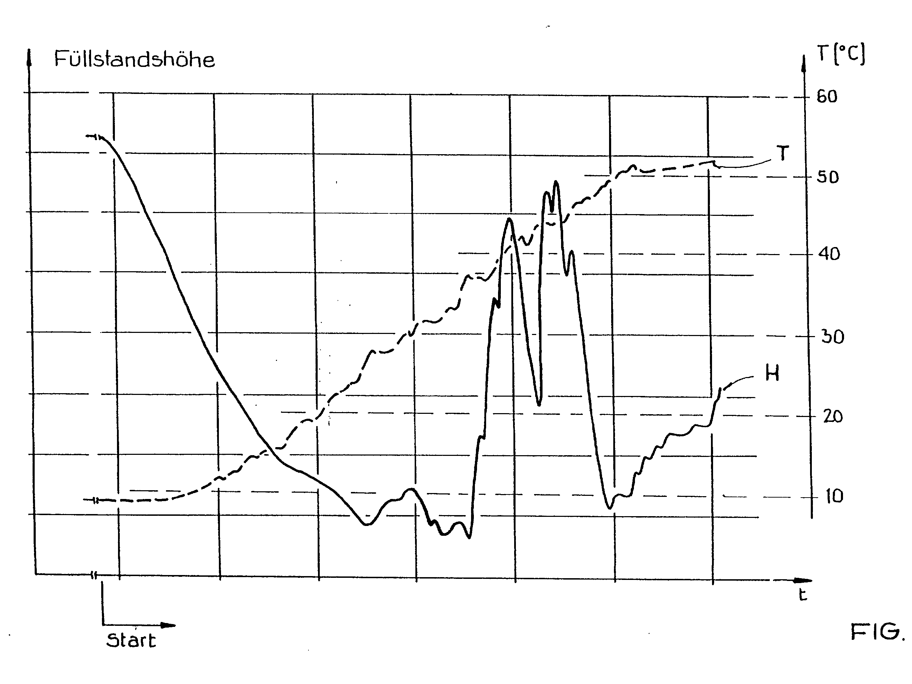

- Figur 1: zeigt den gemessenen Verlauf der Füllstandshöhe und den Verlauf der Temperatur des Motorenöls in Abhängigkeit der Zeit nach einem Kaltstart.

Bei dem folgenden Ausführungsbeispiel wird das Verfahren zum Bestimmen der Viskosität anhand des Motorenöls eines Verbrennungsmotors erläutert. Bei einem Ölstandssensor, der eine die Schwankungen der Füllstandshöhe in seinem Messvolumen dämpfende mechanische Struktur aufweist, folgt die Füllstandshöhe im Messvolumen des Sensors der Füllstandshöhe im Vorratsvolumen zeitlich verzögert. Die Dämpfung bewirkt, dass bei einer Differenz der beiden Füllstandshöhen die Flüssigkeit nur langsam aus dem bzw. in das Messvolumen strömt. Der zeitliche Verlauf des Ausgleichs ist von der Viskosität des Öls abhängig.

Während der Startphase einer Brennkraftmaschine verringert sich das im Vorratsvolumen der Ölwanne befindliche Motorenöl aufgrund des "Öl-Schluckens" des laufenden Motors. D.h. der Mittelwert der Füllstandshöhe des Öls im Vorratsvolumen der Ölwanne verringert sich nach dem Anlassen des Motors um die Menge, die sich nun im Ölkreislauf befindet. Diese Änderung im Vorratsvolumen erfolgt mit einer großen Geschwindigkeit und um einen in erster Näherung konstanten Betrag.

Die Füllstandshöhe im Messvolumen des Ölstandsensors folgt, insbesondere bei kaltem Öl aufgrund der temperaturbedingt höheren Viskosität, der Änderung der Füllstandshöhe im Vorratsvolumen mit einer für eine Messung hinreichenden Zeitkonstante. Die dämpfende mechanische Struktur sorgt dafür, dass sich die Füllstandshöhe im Messvolumen des Sensors langsam an die Füllstandshöhe im Vorratsvolumen annähert. Der Ölstandsensor wirkt unter diesen Betriebsbedingungen wie ein Auslaufviskosimeter. Dieser Umstand wird von dem vorliegenden Verfahren ausgenutzt, um aus dem Absinken der gemessenen Füllstandshöhe H über die Zeit die Viskosität des Öles zu bestimmen. Unmittelbar nach Motorstart ist die zeitliche Änderung der Füllstandshöhe ein Maß für die Viskosität des Motorenöls. Der Gradient -dH/dt > 0 ist proportional zur Viskosität des Öls.

Die Figur zeigt ein Diagramm, in dem der Verlauf der gemessenen Füllstandshöhe H und der Verlauf der Temperatur des Motorenöls in Abhängigkeit der Zeit nach einem Kaltstart aufgetragen sind. Nach dem Start des Motors nimmt die gemessene Füllstandshöhe H des Motorenöls während einer ersten Zeitspanne im wesentlichen mit einer konstanten Steigung ab. Erst später, wenn die Temperatur des Öls entsprechend hoch ist, machen sich fahrdynamische Einflüsse auf die gemessene Füllstandshöhe H bemerkbar.

Zur Bestimmung der Viskosität des Öls wird nach dem Start der Brennkraftmaschine im kalten Zustand während eines definierten Zeitfensters der Verlauf der Füllstandshöhe H des Motorenöls mit dem Ölstandsensor gemessen und ausgewertet. Der Gradient -dH/dt ist proportional zur Viskosität des Öls.

Für eine genauere Aussage über die Viskosität wird die Öltemperatur beim Start der Brennkraftmaschine bestimmt und der aus der zeitlichen Änderung der gemessenen Füllstandshöhe H ermittelte Wert für die Viskosität um den Einfluss der Temperatur T korrigiert.

Eine weitere Verbesserung des Messwerts wird erzielt, wenn zusätzlich zur Temperatur T des Öls noch die Drehzahl der Brennkraftmaschine bei der Bestimmung der Viskosität berücksichtigt wird. Die "Schluckmenge" eines Motors, also die Änderung der Füllstandshöhe im Vorratsvolumen beim Start, ist umso größer, je höher die Drehzahl ist. Die Differenz der Füllstandshöhe im Vorratsbehälter und der Füllstandshöhe im Messvolumen beeinflusst die Änderungsgeschwindigkeit der gemessenen Füllstandshöhe H. Der aus der zeitlichen Änderung der gemessenen Füllstandshöhe H ermittelte Wert für die Viskosität wird bei einer vorteilhaften Ausgestaltung des Verfahren neben dem Einfluss der Temperatur auch um den Einfluss der Drehzahl der Brennkraftmaschine korrigiert. Hierzu wird der Verlauf der Drehzahl während des Zeitfensters der Viskositätsmessung ebenfalls gemessen.

Mit höherer Drehzahl wird gleichzeitig der Motor schneller warm. D.h. der Gradient dT/dt wird größer. Daher kann, falls der Verlauf der Drehzahl nicht bekannt ist, aus der zeitlichen Änderung der Temperatur des Öls näherungsweise auf den Einfluss der Drehzahl auf die Änderung der Füllstandshöhe geschlossen werden. Die Größe-dH/dT liefert ebenfalls ein Maß für die Viskosität des Öles.

Der nach dem oben beschriebenen Verfahren ermittelte Wert für die Viskosität wird in einem zentralen Steuergerät erfasst und beispielsweise zu Diagnosezwecken weiter verarbeitet. So kann zum Beispiel die Viskosität des Motorenöls über längere Zeiträume verfolgt und beim Erreichen eines kritischen Werts eine Warnmeldung ausgegeben werden.

## Patentansprüche

1. Verfahren zum Bestimmen der Viskosität einer Betriebsflüssigkeit einer Brennkraftmaschine durch Ermitteln der Füllstandshöhe der Betriebsflüssigkeit,
**dadurch gekennzeichnet,**
• **dass** ein Sensor zum Ermitteln der Füllstandshöhe der Betriebsflüssigkeit vorgesehen ist, der ein Messvolumen aufweist, das über eine dämpfende Einrichtung mit einem Vorratsvolumen der Betriebsflüssigkeit verbunden ist,
• **dass** beim Startvorgang der Brennkraftmaschine der Verlauf der Füllstandshöhe (H) der Betriebsflüssigkeit im Messvolumen des Sensors gemessen wird und
• **dass** der zeitliche Verlauf der Füllstandshöhe (H) als Maß für die Viskosität dient.

2. Verfahren nach Anspruch 1, **dadurch gekennzeichnet, dass** die Temperatur (T) der Betriebsflüssigkeit beim Startvorgang gemessen wird und in die Bestimmung der Viskosität mit eingeht.

3. Verfahren nach Anspruch 2, **dadurch gekennzeichnet, dass** die Drehzahl der Brennkraftmaschine nach dem Startvorgang gemessen wird und in die Bestimmung der Viskosität mit eingeht.

4. Verfahren nach Anspruch 1, **dadurch gekennzeichnet, dass** die Temperatur der Betriebsflüssigkeit beim Startvorgang und der Verlauf der Temperatur der Betriebsflüssigkeit zur Bestimmung der Viskosität mit herangezogen werden.
